# EUROPEAN PATENT APPLICATION

(11) **EP 4 451 026 A1**
(43) Date of publication of application: **23.10.2024**
(21) Application number: 22907229.3
(22) Date of filing: 01.12.2022
(51) Int. Cl.: G02B 6/36, G02B 6/40

(54) **FERRULE, OPTICAL CONNECTOR, AND METHOD FOR MANUFACTURING OPTICAL CONNECTOR**

(30) Priority: 17.12.2021 JP 2021204899
(71) Applicant: Hakusan, Inc., Kanazawa-shi, Ishikawa 920-8203 (JP)
(72) Inventor: KOBAYASHI Moriaki, Kanazawa-city Ishikawa 920-8203 (JP); UENO Shohei, Kanazawa-city Ishikawa 920-8203 (JP)
(74) Representative: TBK
(86) International application number: PCT/JP2022/044402
(87) International publication number: WO 2023/112701

(57) **Abstract**

[Problem] A small ferrule, the ferrule being able to simplify a manufacturing process, an optical connector, and a method for manufacturing the optical connector. [Solution] A ferrule (100) according to the present invention is provided with: a plurality of fiber holes (20) for causing a plurality of optical fibers (101a) to protrude, respectively, provided in a front end surface (100a); a plurality of fiber guide holes (25) communicating with back ends of the plurality of optical fiber holes (20) and being parallel to each other; and an optical fiber ribbon insertion hole (35) for inserting an optical fiber ribbon (101) comprising the plurality of optical fibers (101a) in a back end surface (100b) on the reverse side from one end surface. The ferrule (100) has a flange portion (30), and is provided with an internal space in which the plurality of fiber holes (20), the fiber guide holes (25), and the optical fiber ribbon insertion hole (35) communicate with each other, and the ferrule (100) is provided with an adhesive filling window (55) for filling an adhesive (GL) into the internal space in only one surface of the flange portion (35).

## Description

### Technical Field

The present invention relates to a ferrule that optically connects optical fibers of an optical cable that transmits optical signals, an optical connector holding the optical fibers, and a method for manufacturing the optical connector.

### Background Art

An optical cable using optical fibers is widely used in information communication for home use and for industrial use because the optical cable is capable of communicating a large amount of information at high speed.

For example, Patent Literature 1 (Japanese Patent Laid-Open No. 2004-020962) discloses an optical connector in which, when an optical fiber ribbon is fixed to a ferrule of the optical connector, resin for bonding can be uniformly poured into an optical fiber ribbon insertion hole of the ferrule without causing air bubbles.

The optical connector described in Patent Literature 1 is provided with a tubular boot for protecting the optical fiber ribbon formed by coating a plurality of optical fibers, a boot attachment hole to which the boot is attached, and the ferrule including the optical fiber ribbon insertion hole provided to communicate with the boot attachment hole and a plurality of optical fiber holes for the plurality of optical fibers provided to communicate with the optical fiber ribbon insertion hole. In a state in which the plurality of optical fibers are attached to the optical fiber holes and the boot to which the optical fiber ribbon is attached is inserted into the boot attachment hole, the optical connector is formed by filling the resin for bonding from a window hole provided in an upper part of the optical fiber ribbon insertion hole. An inclined portion is provided in an optical fiber ribbon storing portion of the fiber ribbon insertion hole.

Patent Literature 2 (Japanese Patent Laid-Open No. 2007-279576) discloses an optical connector that can relax, while preventing leakage of an adhesive, a bending force of an optical fiber with a boot having sufficient flexibility and a manufacturing method that can easily manufacture the optical connector.

The optical connector described in Patent Literature 2 is an optical connector in which the optical fiber is inserted through a fiber insertion hole of a ferrule and fixed by the adhesive, characterized by being provided with, in the back end side of the ferrule, a resin material portion having an elastic force in a state of being injected in a liquid state and solidified.

Patent Literature 3 (Japanese Patent Laid-Open No. 2001-108867) discloses a ferrule for an MT optical connector having high accuracy and shape stability.

The ferrule described in Patent Literature 3 is a ferrule for a multi-fiber optical connector of a mating pin positioning type made of plastic in which guide pin holes are formed on both the left and right sides of a horizontally aligned plurality of optical fiber holes, characterized in that an intermediate portion between the left and right guide pin holes are vertically symmetrically formed thin.

Patent Literature 4 (Japanese Patent Laid-Open No. 2001-264585) discloses a ferrule for an optical connector adapted to improve assembly workability.

The ferrule for the optical connector described in Patent Literature 4 is a ferrule for an optical connector including a guide hole into which a guide pin is inserted and including an optical fiber insertion portion extending from optical connection ports formed on a front end surface side toward the inside, characterized in that convex portions are formed on the front end surface side to correspond to the number of optical connection ports and the optical connection ports are disposed at the vertexes of the convex portions.

### Citation List

### Patent Literature

Patent Literature 1: Japanese Patent Laid-Open No. 2004-020962
Patent Literature 2: Japanese Patent Laid-Open No. 2007-279576
Patent Literature 3: Japanese Patent Laid-Open No. 2001-108867
Patent Literature 4: Japanese Patent Laid-Open No. 2001-264585

### Summary of Invention

### Technical Problem

An optical cable has been conventionally a cable for connecting pieces of information communication equipment at a distance apart from each other. According to an increase in speed and an increase in density of the information communication equipment, recently, optical cables have been often used for internal wiring of the information communication equipment. In such a case, an optical connector that connects the optical cables are often disposed at an end portion of a PC board of the information communication equipment or on the PC board. A reduction in the size of the optical connector or a ferrule configuring the optical connector is becoming necessary.

However, when the reduction in the size of the ferrule in recent years is pursued, a problem occurs in that, even if the optical fiber is fixed to the ferrule by an adhesive, the optical fiber is cracked when a connection end surface is roughly polished. Note that the rough polishing includes largely cutting, with a cutter or the like, a portion of the optical fiber protruding from the ferrule.

In order to suppress the crack of the optical fiber, a separate process has been necessary in manufacturing. For example, after the optical fiber was inserted, it was necessary to apply the adhesive again in a later process. The inventor has found that the crack of the optical fiber can be prevented.

An object of the present invention is to provide a small ferrule, the ferrule being able to simplify a manufacturing process, an optical connector, and a method for manufacturing the optical connector.

Another object of the present invention is to provide a small ferrule adaptable to an increase in the density of information equipment, the ferrule being able to prevent a deficiency such as a crack while securely holding an optical fiber and simplify a manufacturing process, and an optical connector, and a method for manufacturing the optical connector.

### Solution to Problem

(1) A ferrule according to one aspect is a ferrule provided with: a plurality of fiber holes for causing a plurality of optical fibers to protrude, respectively, provided in one end surface; a plurality of fiber guide holes communicating with back ends of the plurality of optical fiber holes and being parallel to each other; and an optical fiber ribbon insertion hole for inserting an optical fiber ribbon comprising the plurality of optical fibers in the other end surface on a reverse side from the one end surface. The ferrule has a flange portion and is provided with an internal space in which the plurality of fiber holes, the fiber guide holes, and the optical fiber ribbon insertion hole communicate with each other, and the ferrule is provided with an adhesive filling window for filling an adhesive into the internal space in only one surface of the flange portion.

In recent years, it has been examined to use an optical cable for internal wiring of information communication equipment. A small ferrule that can be connected to optical fibers in a narrow space is required in a connecting portion of an optical transceiver and a connection portion in board mounting.

According to a reduction in the size of the ferrule, if the distance between the connection end surface and the optical fiber ribbon insertion hole is reduced and the distance between the connection end surface and the adhesive filling window decreases, the distance of the fiber guide holes decreases. As a result, an amount of the adhesive discharged to the connection end surface decreases when the optical fibers are inserted through the ferrule filled with the adhesive. As a result, a problem occurs in that a crack occurs in the optical fibers in a process for cutting the optical fibers and polishing the connection end surface. In the ferrule of the present invention, by providing the filling window in the flange portion, it is possible to secure the distance of fiber guide grooves. Therefore, an amount of the adhesive discharged to the connection end surface is secured and it is possible to securely hold the optical fibers. It is possible to prevent damage to the optical fibers even when the optical fibers are cut and the connection end surface is polished.

That is, by forming the adhesive filling window in the flange portion of the ferrule, it is possible to secure the length of the fiber guide holes of the optical fibers by a predetermined distance or more in the internal space of the ferrule.

When the adhesive filling window was formed across the edge of the flange portion, the adhesive leaked to the vicinity of the flange portion of the ferrule because of the influence of the capillarity. However, by forming the adhesive filling window only in the flange portion, a symptom of making a polishing process difficult has been successfully prevented.

(2)
A ferrule according to a second invention is the ferrule according to the one aspect, wherein length from the one end surface to the other end surface of the ferrule may be 4 mm, and length of the fiber guide holes in the internal space of the ferrule may be 1.7 mm or more and 2.5 mm or less.

In this case, the ferrule is reduced in size in order to implement high-density mounting. If the guide hole length is not within a predetermined range, a problem occurred in that the optical fibers are cracked in the case of rough polishing. For that reason, the length of the fiber guide holes is preferably 1.7 mm or more and 2.5 mm or less.

Here, a direction for connecting the front end surface and the back end surface is represented as a length direction, a direction orthogonal to the length direction is represented as a width direction, and a direction orthogonal to the length direction and the width direction is represented as an up-down direction. Note that the rough polishing includes largely cutting, with a cutter or the like, portions of the optical fibers protruding from the ferrule.

(3)
A ferrule according to a third invention is the ferrule according to the one aspect or the second invention, wherein the ferrule may be made of PPS resin, and the optical fiber holes may be formed in a diameter of 125 micrometers.

A small and high-density multi-fiber ferrule is required of extremely high position and dimension accuracy. Therefore, it is preferable to use polyphenylene sulfide (PPS) resin. A clad hole diameter of the optical fibers may be set to a diameter of 125 micrometers. Note that the optical fiber holes are preferably larger in a range of +1 micrometer or less than the diameter of 125 micrometers.

(4)
A ferrule according to a fourth invention is the ferrule according to from the one aspect to the third invention, wherein the flange portion of the ferrule may be preferably formed over an entire periphery in parallel to the one end surface of the ferrule.

In this case, when a polishing process for the small ferrule is carried out, since the ferrule can be securely held by the flange portion, it is possible to realize extremely high accuracy. In particular, the flange portion of the ferrule reduced in size serves as a reference plane in polishing the distal ends of the optical fibers at a predetermined angle, for example, 8 degrees. Therefore, the flange portion of the ferrule is formed over the entire periphery, whereby it is possible to further improve accuracy.

(5)
An optical connector according to another aspect is the optical connector with a plurality of optical fibers loaded in the ferrule according to from the one aspect to the fourth invention.

In this case, it is possible to easily mass-produce the optical connector reduced in size in which the plurality of optical fibers are loaded in the ferrule.

(6)
A method for manufacturing an optical connector according to still another aspect is a method for manufacturing an optical connector in which the ferrule according to from the one aspect to the fourth invention is used, the method including: an adhesive filling step for filling the adhesive in the internal space from the adhesive filling window provided in the flange portion of the ferrule; an optical fiber ribbon inserting step for inserting the optical fibers from the optical fiber ribbon insertion hole of the ferrule; an adhesive hardening step for fixing the optical fibers; and a polishing step for polishing the plurality of optical fibers protruding from the one end surface of the ferrule.

In this case, it is possible to easily mass-produce the optical connector reduced in size in which the plurality of optical fibers are loaded in the ferrule.

(A)
The ferrule may include a ferrule main body, an optical fiber ribbon insertion hole, optical fiber holes, fiber guide holes, and an adhesive filling window. The ferrule main body includes the flange portion and is formed in a substantially rectangular parallelepiped. The optical fiber ribbon insertion hole is provided at an end portion on the flange portion side of the ferrule main body and into which the optical fiber ribbon is inserted.

The optical fiber holes are provided on a connection end surface side of another end portion of the ferrule main body.

The fiber guide holes are provided between the optical fiber ribbon insertion hole and the optical fiber holes. The adhesive filling window is formed on an upper surface of the ferrule main body and for filling the inside space of the ferrule body with adhesive to fix the optical fiber to the ferrule body.

The adhesive filling window may be formed in the flange portion and may communicate with the guide holes, and length of the guide holes may be in a range of 1.7 mm or more and 2.5 mm or less.

### Brief Description of Drawings

[Figure 1] Figure 1 is a schematic perspective view illustrating an example of a ferrule in an embodiment.
[Figure 2] Figure 2(a) is a schematic top view of the ferrule, Figure 2(b) is a schematic side view of the ferrule viewed from the left side, Figure 2(c) is a schematic side view of the ferrule viewed from the right side, and Figure 2(d) is a schematic sectional view of the ferrule taken along an A-A surface in Figure 2(a).
[Figure 3] Figure 3 is a schematic exploded perspective view illustrating an example of an optical connector configured from the ferrule and an optical fiber ribbon.
[Figure 4] Figure 4 is a schematic sectional view illustrating an example in which the optical connector into which the optical fiber ribbon is inserted is taken along a surface equivalent to the A-A surface in Figure 2 (a) .
[Figure 5] Figure 5 is a diagram illustrating an example of a back end surface in a ferrule in an example.
[Figure 6] Figure 6 is a plan view illustrating an example of a comparative example.
[Figure 7] Figure 7 is a plan view illustrating an example of a comparative example.
[Figure 8] Figure 8 is a plan view illustrating an example of a comparative example.
[Figure 9] Figure 9 is a diagram illustrating an example of an end surface observation of an adhesive in ferrules in the example and a comparative example 1.

### Description of Embodiment

An embodiment of the present invention is explained below with reference to the drawings.

In the following explanation, the same components are denoted by the same reference numerals and signs. Names and functions of the components are also the same. Therefore, detailed explanation of the components is not repeated.

### <First Embodiment>

### (Ferrule 100)

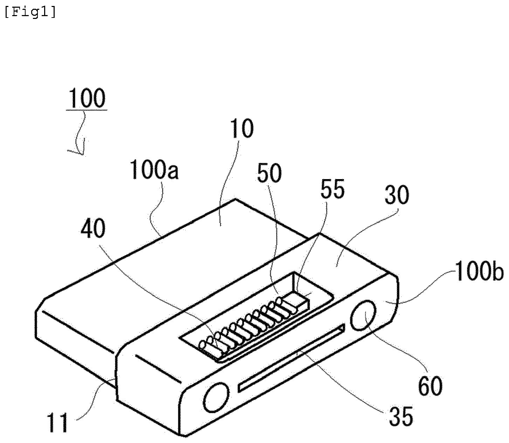

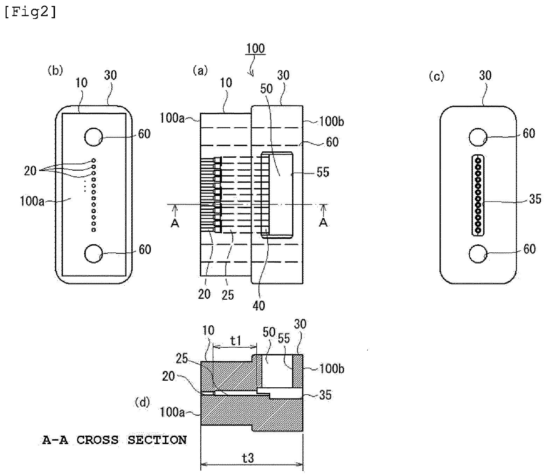

Figure 1 is a schematic perspective view illustrating an example of a ferrule 100 in the present embodiment. Figure 2(a) is a schematic top view of the ferrule 100, Figure 2(b) is a schematic side view of the ferrule 100 viewed from the left side, Figure 2(c) is a schematic side view of the ferrule 100 viewed from the right side, and Figure 2(d) is a schematic sectional view of the ferrule 100 taken along an A-A surface in Figure 2 (a) .

As illustrated in Figure 1 and Figure 2, the ferrule 100 in the present embodiment includes a ferrule main body 10 and a flange portion 30 in which a flange is formed for the ferrule main body 10.

Note that, in the following explanation of the present specification, a direction for connecting a front end surface 100a and a back end surface 100b (the left-right direction in Figure 2(a)) is represented as a length direction, a direction orthogonal to the length direction (the up-down direction in Figure 2(a)) is represented as a width direction, and a direction orthogonal to the length direction and the width direction is represented as an up-down direction.

Since the ferrule 100 in the present embodiment is small and, in particular, is required of accuracy, polishing and the like are carried out using four surfaces between the ferrule main body 10 and the flange portion 30, that is, steps formed on other than the front end surface 100a and the back end surface 100b.

In the ferrule main body 10, a plurality of optical fiber holes 20 for inserting, positioning, and fixing a portion where coating of optical fibers 101a is removed, a plurality of fiber guide holes 25 communicating with the back ends of these plurality of optical fiber holes 20 and parallel to one another, and a U-shaped or V-shaped plurality of fiber guide grooves 40 communicating with the back ends of the plurality of fiber guide holes 25 and parallel to one another are formed from the front end surface 100a toward the back end surface 100b of the ferrule main body 10.

The flange portion 30 of the ferrule 100 is provided with an optical fiber ribbon insertion hole 35 into which an optical fiber ribbon 101 through which the optical fibers 101a are inserted is inserted and an adhesive filling portion 50 into which an adhesive for fixing the optical fibers 101a to the ferrule main body 10 is injected.

In the ferrule 100, two guide pin holes 60 formed in the vicinities of both the end portions in the lateral width direction in parallel to the plurality of optical fiber holes 20 and for inserting guide pins are formed.

Note that, in the present embodiment, as usual, the optical fiber ribbon 101 obtained by collecting a plurality of optical fibers 101a is used. The optical fiber ribbon 101 further provided with a boot is not used.

For that reason, in the back end surface 100b of the ferrule 100, the optical fiber ribbon insertion hole 35 not having size for inserting the boot but having smaller size is formed. As indicated by an A-A cross section in Figure 2, the ferrule 100 is provided with an internal space for causing the optical fiber holes 20 and the fiber guide holes 25 and the optical fiber ribbon insertion hole 35 to communicate and the adhesive filling portion 50 communicating with the internal space.

In the ferrule 100, the number of fibers is further increased and the thickness is further reduced in order to cope with an increase in the density of information equipment. In particular, in recent years, board mounting of optical communication wiring has been examined. In a connecting portion of an optical transceiver and a connecting portion in the board mounting, a small ferrule 100 that can be connected to an optical fiber in a narrow space is required.

In the ferrule 100 in the present embodiment, the number of the plurality of optical fibers 101a is twelve and the diameter of the plurality of optical fibers 101a is 1.25 mm, the maximum width of the ferrule 100 is 7.00 mm, and length t3 of the ferrule 100 is 4 mm. Therefore, a ratio of the width and the height is 5.6.

Note that the ferrule 100 in the present embodiment is configured by, for example, molding a resin material filled with an inorganic filler. The resin material is thermosetting epoxy resin, PPS (polyphenylene sulfide), and the like. Among these materials, it is preferable to use the polyphenylene sulfide (PPS) resin from the viewpoints of position accuracy, dimension accuracy, a molding shrinkage rate, and thermal stability. This makes it possible to obtain the ferrule 100 that is small and has a small connection loss even if high-density mounting is performed. For example, granular silica can be used for the inorganic filler. By filling the inorganic filler, it is possible to improve the strength of the ferrule 100.

### (Optical connector 200)

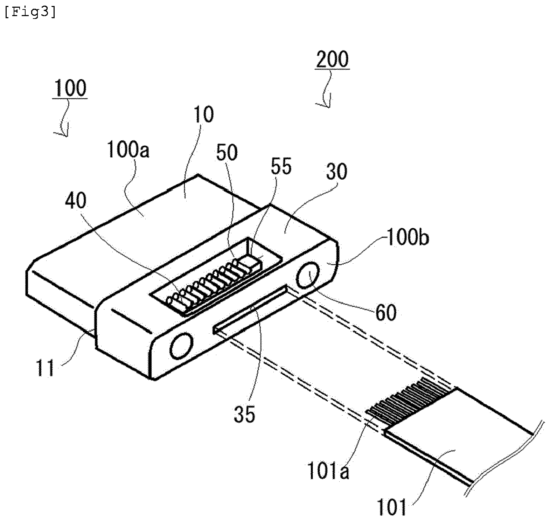

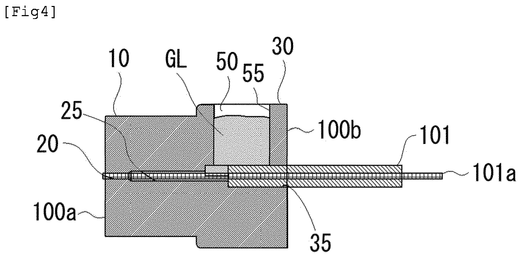

Figure 3 is a schematic exploded perspective view illustrating an example of an optical connector 200 configured from the ferrule 100 and the optical fiber ribbon 101. Figure 4 is a schematic sectional view illustrating an example in which the optical connector 200, into which the optical fiber ribbon 101 is inserted, is taken along a surface equivalent to the A-A surface in Figure 2(a).

First, an adhesive is filled in the adhesive filling portion 50 provided in the flange portion 30. The adhesive is preferably a thermosetting epoxy adhesive. Note that, as the adhesive, an adhesive of any other curing type such as UV curing may be used.

Subsequently, the optical fiber ribbon 101 obtained by collecting the plurality of optical fibers 101a is inserted into the optical fiber ribbon insertion hole 35 provided in the flange portion 30 of the ferrule 100.

As illustrated in Figure 3, the distal end side of the optical fiber ribbon 101 is the optical fibers 101a from which coating of the optical fiber ribbon 101 is peeled. The optical fibers 101a are inserted to reach the front end surface 100a of the ferrule 100 through the fiber guide grooves 40, the fiber guide holes 25, and the optical fiber holes 20 in the internal space of the ferrule 100.

In this case, since the fiber guide grooves 40 can be visually recognized from the adhesive filling window 55 in the adhesive filling portion 50, it is possible to easily insert the optical fibers 101a into the fiber guide holes 25. Since length t1 of guide holes of the fiber guide holes 25 is 1.7 mm or more, it is possible to securely hold the optical fibers 101a.

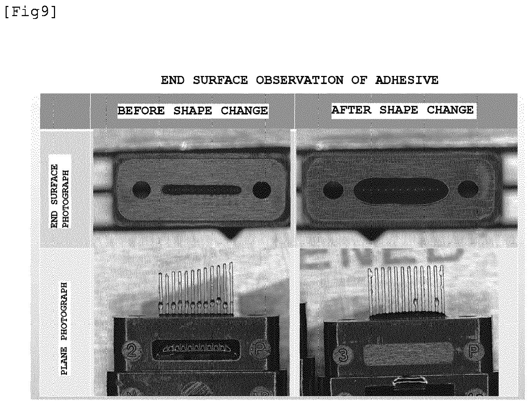

That is, since the length t1 of the guide holes is a predetermined distance or more, when the optical fibers 101a are inserted through the ferrule 100 filled with the adhesive, a sufficient amount of the adhesive is discharged to a connection end surface of the ferrule 100 (see Figure 9). Therefore, even when the optical fibers 101a are cut and the connection end surface is polished thereafter, it is possible to securely hold the optical fibers 101a. It is possible to prevent the optical fibers 101a from being cracked. This makes it possible to obtain the ferrule 100 having a small connection loss even if formed small.

The length t1 of the guide holes of the fiber guide holes 25 is preferably 1.0 mm or more, more preferably 1.5 mm or more, and still more preferably 1.7 mm or more. This makes it possible to securely hold the optical fibers 101a with an adhesive GL.

The length t1 of the guide holes of the fiber guide holes 25 is preferably 3.0 mm or less, more preferably 2.5 mm or less, and still more preferably 2.0 mm or less. This makes it possible to reduce the size of the entire ferrule 100.

In this case, the inner diameter of the fiber guide holes 25 can be selected as appropriate according to a clad diameter of the optical fibers 101a and can be set to, for example, 250 µm, 125 µm, 100 µm, 80 µm, and 50 µm.

The optical fibers 101a are inserted to protrude approximately 1 mm from the front end surface 100a of the ferrule 100. Note that it is desirable to retract the optical fibers 101a and infiltrate the adhesive GL into the fiber guide holes 25 and the optical fiber holes 20.

Subsequently, heat curing is applied to the adhesive GL and the adhesive is fixed. Thereafter, the optical fibers 101a largely protruding from the front end surface 100a are cut by a cutter or the like, polishing of the front end surface 100a of the ferrule 100, to which the optical fiber ribbon 101 is fixed, is carried out using the steps between the ferrule main body 10 and the flange portion 30, and the optical connector 200 is formed. Note that, in the present embodiment, two-stage processes of rough polishing and regular polishing are used in the polishing. Note that the rough polishing includes largely cutting, with a cutter or the like, portions of the optical fibers protruding from the ferrule.

### (Example of the ferrule 100 and comparative examples)

An example of the ferrule 100 and comparative examples are explained below. The example in the present embodiment is the ferrule 100 illustrated in Figure 1 and Figure 2.

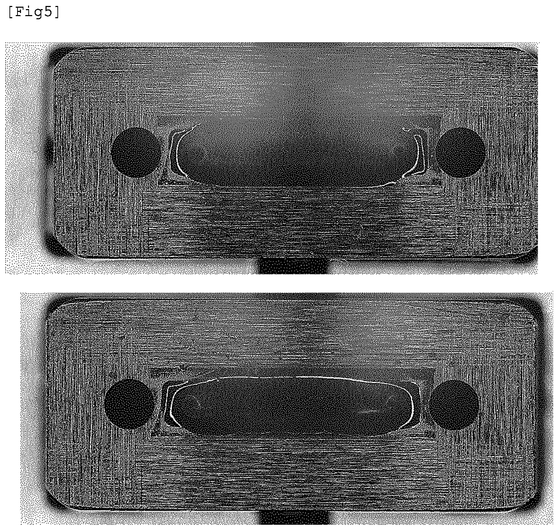

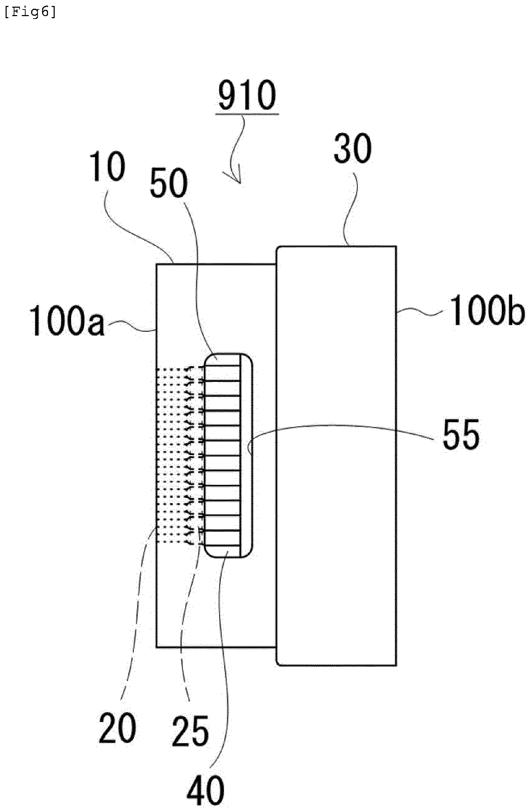

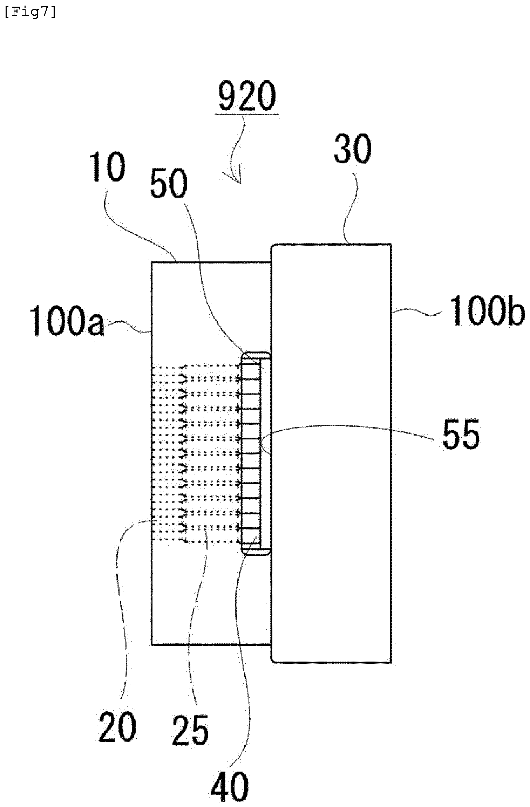

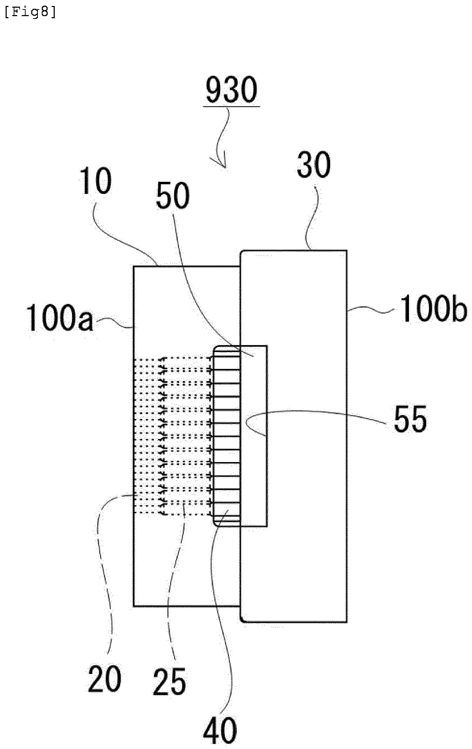

Figure 5 is a diagram illustrating an example of the back end surface 100b in the ferrule 100 in the example. Figure 6 is a plan view illustrating an example of a ferrule 910 in a comparative example 1. Figure 7 is a plan view illustrating an example of a ferrule 920 in a comparative example 2. Figure 8 is a plan view illustrating an example of a ferrule 930 in a comparative example 3.

Figure 9 is a diagram illustrating an example of an end surface observation of an adhesive in the ferrule 100 in the example and the ferrule 910 in the comparative example 1. Before shape change indicates the ferrule 910 in the comparative example 1. After shape change indicates the ferrule 100 in the example.

End surface photograph indicates the front end surface 100a. Plane photograph indicates a state viewed from the upper surface.

### [Example]

As illustrated in Figure 1 to Figure 3, in the ferrule 100 in the example, the adhesive filling window 55 and the adhesive filling portion 50 were provided in the flange portion 30. In this case, the length of the adhesive filling window 55 was 1.20 mm. The distal ends of the optical fibers 101a were successfully visually recognized. Deterioration in work efficiency did not occur.

The length t1 of the fiber guide holes 25 was successfully provided by 1.7 mm while a reduction in the size of the ferrule 100 itself having been realized. As a result, a crack of the optical fibers 101a did not occur.

The ferrule 100 in the present example does not include, on the back end surface 100b side facing the front end surface 100a, which is the connection end surface, a boot insertion hole for inserting a boot. This is because the small ferrule 100 is required in the connecting portion of the optical transceiver and the connecting portion in the board mounting. So, a space for inserting the boot is not provided. And this is because, in the present embodiment, since the ferrule 100 to be installed in the connecting portion of the optical transceiver is created, there is no risk of the optical fibers 101a being bent or stress being applied to the optical fibers 101a and a problem does not occur even if the boot is not provided. Note that presence or absence of the boot insertion hole can be designed as appropriate according to a purpose of the ferrule 100 in use.

Further, as illustrated in Figure 5, when the ferrule 100 was assembled with the optical fiber ribbon 101 without using the boot, the adhesive GL did not leak and did not overflow from the optical fiber ribbon insertion hole 35 and flow into the guide pin holes 60. This is considered to be because, since the distance from the back end surface 100b facing the front end surface 100a, which is the connection end surface, to an inlet of the fiber guide holes 25 was short, an amount of the overflowing adhesive GL was suppressed by inserting the optical fiber ribbon 101. In the present example, the distance was set to 1.8 mm. However, the distance is preferably 3.0 mm or less, more preferably 2.5 mm or less, and still more preferably 2.0 mm or less. This makes possible to prevent leakage of the adhesive GL.

Further, as illustrated in Figure 9, in the ferrule 100 in the example, it is seen that the adhesive GL securely spills out to the front end surface 100a as well and the adhesive GL is formed in a convex shape in the portions of the optical fibers 101a and the optical fiber holes 20. In this case, by heat-curing the adhesive GL, the optical fibers 101a were not cracked even if excess optical fibers 101a were cut by an edge tool such as a cutter.

### [Comparative example 1]

As illustrated in Figure 6, in the ferrule 910 in the comparative example 1, the adhesive filling window 55 and the adhesive filling portion 50 were provided on the ferrule main body 10 side as in the ferrule of the related art.

In this case, the length of the adhesive filling window 55 was 0.8 mm and work for inserting the optical fibers 101a was difficult. That is, the work efficiency was deteriorated because, although the distal ends of the optical fibers 101a were able to be visually recognized, there was no room to do so. For a reduction in the size of the ferrule itself, the length of the fiber guide hole 25 could only be 0.5 mm.

For that reason, as illustrated in Figure 9, in the ferrule 910 in the comparative example 1, not much adhesive GL spills out to the front end surface 100a, the adhesive GL is absent in the portions of the optical fibers 101a and the optical fiber holes 20, and the adhesive GL only adheres to the optical fibers 101a in a ball shape. In this case, even if the adhesive GL was heat-cured, a crack occurred in the optical fibers 101a in the process of the rough polishing. In order to prevent the crack, it was necessary to increase an adhesive amount seeping out to the front end surface 100a side when the optical fibers 101a were inserted. It was necessary to apply the adhesive to the front end surface 100a with manual work after optical fiber insertion to make it the same as the ferrule 100 after the shape change of the example illustrated in Figure 9. As a result, work processes increased and production efficiency was markedly deteriorated.

### [Comparative example 2]

As illustrated in Figure 7, in the ferrule 920 in the comparative example 2, in order to change the length of the fiber guide holes 25 to be longer than 0.5 mm, the adhesive filling window 55 and the adhesive filling portion 50 were provided to be closer to the flange portion 30 side on the ferrule main body 10 side.

In this case, the length of the fiber guide holes 25 increased to 1.5 mm. However, since the length direction of the adhesive filling window 55 was set to 0.5 mm, the adhesive was unable to be securely filled. Further, the work efficiency was deteriorated because, although the distal ends of the optical fibers 101a were able to be visually recognized, there was no room to do so.

In a heating process for heating the adhesive, the capillarity occurred, the adhesive flowed into between the ferrule main body 10 and the flange portion 30, and the steps between the ferrule main body 10 and the flange portion 30 were unable to be gripped in the polishing process.

### [Comparative example 3]

As illustrated in Figure 8, in the ferrule 930 in the comparative example 3, the adhesive filling window 55 and the adhesive filling portion 50 were formed over the ferrule main body 10 and the flange portion 30.

In this case, the length of the adhesive filling window 55 was successfully securely provided. However, in the heating process for heating the adhesive, the capillarity occurred, the adhesive flowed into between the ferrule main body 10 and the flange portion 30, and the steps between the ferrule main body 10 and the flange portion 30 were unable to be gripped in the polishing process.

### [Discussion of the example and the comparative examples]

When the example and the comparative examples 1, 2, and 3 are compared, the example is different from the comparative examples in:
a) the length of the adhesive filling window 55 is large;
b) the adhesive filling window 55 is provided in only the flange portion 30; and
c) the length t1 of the fiber guide holes 25 is 1.7 mm or more.

Accordingly, a reason for the work efficiency being high and a crack of the optical fibers 101a not occurring in the ferrule 100 in the example is that the adhesive filling window 55 is formed in only the flange portion 30 and the length t1 of the fiber guide holes 25 is 1.7 mm or more.

From the results explained above, it has been found that, in the ferrule 100 for realizing a reduction in the size of 4 mm in the length t3 of the ferrule 100, the adhesive filling portion 50 and the adhesive filling window 55 should be provided in the flange portion 30, and the length of the fiber guide holes 25 at a predetermined length. It has been found that the length t1 of the fiber guide holes 25 is preferably 1.7 mm or more.

Note that, since the ferrule 100 does not include a boot, the ferrule 100 cannot withstand up-down and left-right stresses applied in the case of the optical fibers 101a equal to or longer than several tens meters. Therefore, the ferrule 100 is optimum in internal communication of a personal computer having a short communication distance, on-board communication, communication of a wireless communication device, and the like.

In the present invention, the plurality of optical fibers 101a are equivalent to "a plurality of optical fibers", the optical fiber holes 20 are equivalent to "a plurality of fiber holes", the front end surface 100a is equivalent to "one end surface", the fiber guide holes 25 are equivalent to "a plurality of fiber guide holes", the optical fiber ribbon 101 is equivalent to "an optical fiber ribbon", the optical fiber ribbon insertion hole 35 is equivalent to "an optical fiber ribbon insertion hole", the back end surface 100b is equivalent to "another end surface", the ferrule 100 is equivalent to "a ferrule", the flange portion 30 is equivalent to "a flange portion", the adhesive GL is equivalent to "an adhesive", the adhesive filling window 55 is equivalent to "an adhesive filling window", and the optical connector 200 is equivalent to "an optical connector".

A preferred embodiment of the present invention is as explained above. However, the present invention is not limited to only the embodiment. It would be understood that other various embodiments not departing from the spirit and the scope of the present invention can be made. Further, in the present embodiment, the action and the effects by the configuration of the present invention are explained. However, the action and the effects are examples and do not limit the present invention.

### Reference Signs List

10 Ferrule main body
20 Optical fiber hole
25 Fiber guide hole
30 Flange portion
35 Optical fiber ribbon insertion hole
50 Adhesive filling portion
55 Adhesive filling window
100 Ferrule
100a Front end surface
100b Back end surface
101 Optical fiber ribbon
101a Optical fiber
200 Optical connector
GL Adhesive

## Claims

1. A ferrule provided with:
a plurality of fiber holes for causing a plurality of optical fibers to protrude, respectively, provided in one end surface;
a plurality of fiber guide holes communicating with back ends of the plurality of optical fiber holes and being parallel to each other; and
an optical fiber ribbon insertion hole for inserting an optical fiber ribbon comprising the plurality of optical fibers in the other end surface on a reverse side from the one end surface,
the ferrule having a flange portion and being provided with an internal space in which the plurality of fiber holes, the fiber guide holes, and the optical fiber ribbon insertion hole communicate with each other, the ferrule being provided with an adhesive filling window for filling an adhesive into the internal space in only one surface of the flange portion.

2. The ferrule according to claim 1, wherein
length from the one end surface to the other end surface of the ferrule is 4 mm, and
length of the fiber guide holes in the internal space of the ferrule is 1.7 mm or more and 2.5 mm or less.

3. The ferrule according to claim 1 or 2, wherein
the ferrule is made of PPS resin, and
the optical fiber holes are formed in a diameter of 125 micrometers.

4. The ferrule according to any one of claims 1 to 3, wherein the flange portion of the ferrule is formed over an entire periphery in parallel to the one end surface of the ferrule.

5. An optical connector with a plurality of optical fibers loaded in the ferrule according to any one of claims 1 to 4.

6. A method for manufacturing an optical connector in which the ferrule according to any one of claims 1 to 4 is used, the method comprising:
an adhesive filling step for filling the adhesive in the internal space from the adhesive filling window provided in the flange portion of the ferrule;
an optical fiber ribbon inserting step for inserting the optical fibers from the optical fiber ribbon insertion hole of the ferrule;
an adhesive hardening step for fixing the optical fibers; and
a polishing step for polishing the plurality of optical fibers protruding from the one end surface of the ferrule.
